# EUROPEAN PATENT APPLICATION

(11) **EP 4 335 295 A1**
(43) Date of publication of application: **13.03.2024**
(21) Application number: 22194386.3
(22) Date of filing: 07.09.2022
(51) Int. Cl.: A22B 5/00, A22B 7/00, A22C 17/00, A22C 21/00, A22C 25/18, B01D 47/06

(54) **A FOOD PROCESSING INSTALLATION**

(71) Applicant: Marel Iceland EHF, 210 Gardabaer (IS)
(72) Inventor: Erlingsson, Hilmar, 210 Gardabaer (IS); Siggeirsson, Elías Mikael Vagn, 210 Gardabaer (IS)
(74) Representative: Inspicos P/S

(57) **Abstract**

The invention relates to a food processing installation for processing food items. The food processing installation comprises: a food processing enclosure; a cutting device in the food processing enclosure; a particle capturing enclosure; an exhaust vent connected to the food processing enclosure via a vent inlet and connected to the particle capturing enclosure via a vent outlet; and a spray nozzle arrangement separate from the cutting device and located downstream relative to the vent inlet. The exhaust vent is configured to conduct an exhaust flow of exhaust air comprising food aerosols emitted from the food processing enclosure to the particle capturing enclosure, and the spray nozzle arrangement is configured to eject a spray of droplets that coalesce with the food aerosols. The invention further relates to a method of filtering air from a food processing installation and a particle capturing device.

## Description

### FIELD OF THE INVENTION

The present invention relates to a food processing installation, a method of filtering air from a food processing installation, and a particle capturing device for a food processing installation.

### BACKGROUND OF THE INVENTION

Automated food production in food processing installations includes separation of food items into different parts and portions via cutting. For example, whole fish are gutted, de-headed, filleted and skinned and subsequently the fillets are divided into multiple portions.

Various technologies are available to perform such cutting such as saws, knives, and water jet cutting devices. During cutting, small particles of food material are typically dispersed into the air. Such particles may for example be any of fine solid particles, liquid droplets, or a mixture thereof. Further, particle size may range from nano meters to milli meters. The distribution of particle size and types naturally depends on the food item and choice of technology for cutting.

The particles emitted from the food items due to the cutting may be released into the surrounding environment. Typically, the cutting is performed in some type of enclosure which may reduce such releases, but nevertheless a signification portion of the particles are often carried out with the exhaust air of the food processing installation.

Consequently, particles from food processing installations may cause irritation in the respiratory tract and/or lungs of persons working at the facility of the food processing installation.

Moreover, a continuous emission of particles from food processing installations may cause an increased need for cleaning the facility of the food processing installation.

In addition, the lifetime of various equipment at the facility of the food processing installation may be impaired by particles from the food processing installation.

### SUMMARY OF THE INVENTION

On the above background, it is an object of preferred embodiments of the invention to provide a food processing installation and a method which may reduce respiratory irritations of person working near the food processing installation. It is a further object of preferred embodiments of the invention to provide a food processing installation and a method which may reduce the need for cleaning facilities surrounding a food processing installation and potentially improve the lifetime of various equipment.

In a first aspect, the invention relates to a food processing installation for processing food items, said food processing installation comprising:
a food processing enclosure;
a cutting device in said food processing enclosure configured to cut said food items in said food processing enclosure;
a particle capturing enclosure;
an exhaust vent connected to said food processing enclosure via a vent inlet and connected to said particle capturing enclosure via a vent outlet, wherein said exhaust vent is configured to conduct an exhaust flow of exhaust air comprising food aerosols emitted from said food processing enclosure to said particle capturing enclosure; and
a spray nozzle arrangement separate from said cutting device and located downstream of said exhaust flow relative to said vent inlet, wherein said spray nozzle arrangement is configured to eject a spray of droplets that coalesce with said food aerosols of said exhaust air.

The provision of a spray nozzle arrangement located downstream of the exhaust flow relative to the vent inlet configured to eject a spray of droplets that coalesce with food aerosols from the food processing enclosure may potentially reduce the concentration of aerosols released into the surroundings of the food processing installation via the exhaust air. Consequently, the provision of the spray nozzle arrangement according to the present invention may reduce respiratory irritations of persons working near the food processing installation, reduce the need for cleaning, improve the lifetime of surrounding equipment, or any combination thereof.

A positioning of the spray nozzle arrangement downstream of the exhaust flow may ensure that the exhaust flow is at least partially spatially accumulated via the vent, thereby potentially ensuring that most of the exhaust air is exposed to the spray of droplets of the spray nozzle arrangement. Moreover, this positioning may ensure that the spray of droplets coalesced with the food aerosols are not deposited on the food items, but that these can be collected in a controlled manner, such as in a bottom tray integrated in the particle capturing enclosure.

In the context of the present invention, a food processing enclosure may for example be understood as a cabinet, chamber, box, or container in which food items are processed. Typically, the food processing enclosure provides at least a partial separation of an internal volume of the food processing enclosure in which the food processing occurs, and an external environment at which persons working at the facility of the food processing installation, or other food processing installations, may be located. However, the internal volume and the external environment are rarely entirely sealed from each other. For example, food items have to enter and exit the installation, and the food processing enclosure may have means, such as bottom openings, for water and other residue materials to leave the food processing enclosure.

A cutting device may for example be a saw, an arrangement of one or more knives, or a water jet cutting devices. Primarily, the cutting device should preferably be configured to cut food items, for example to divide food items into multiple portions. A cutting device may alternatively or additionally be configured to gut, de-bone, de-head, skin, and/or fillet food items.

Food items may typically be selected from pork, beef, lamb, poultry, and seafood such as fish.

In the context of the present invention, food aerosols may be understood as fine solid particles, liquid droplets, and mixtures thereof, from the food items, emitted as a consequence of the processing of the food items in the food processing installation. When food items are cut, small particles and/or droplets from the food items are unavoidably emitted into the surrounding volume inside the food processing enclosure. Residing in the air, these emitted particles and/or droplets of food can be referred to as food aerosols.

A spray nozzle arrangement may be understood as one or more spray nozzles. Accordingly, the one or more spray nozzles are each configured to eject a spray of droplets. In the context of the present invention, the spray of droplets may be ejected as a mist, a fog, and/or as a spray of (larger) droplets. The exact number and type of spray nozzles may, for example, be selected based on the size distribution and type of food aerosols and based on the exact placement of the spray nozzle arrangement in the food processing installation. The spray nozzle arrangement is separate from the cutting device in the sense that the spray nozzle arrangement is not a jet cutting device in the food processing enclosure configured to cut food items in the food processing enclosure.

A particle capturing enclosure may be understood as an enclosure intended to separate food aerosols from the exhaust air, at least partially. In the present invention, this is performed by means of the spray nozzle arrangement configured to eject a spray of droplets. These droplets are then able to collide with the food aerosols. As a result, these aerosols coalesce with the droplets. In practice, smaller food particles may be captured inside larger droplets from the spray, smaller droplets from the spray may be bound to larger particles of food, and/or food droplets may fuse with droplets from the spray. In any case, by coalescing the spray of droplets with the food aerosols, the individual particles of the resulting mixture tend to have an increased mass, and as a result, the particles having an increased mass are likely to be pulled downward by gravity instead of flowing along with the exhaust air as the food aerosols did prior to coalescing with the spray of droplets. The mixture may then be collected in a controlled manner, for example in a bottom tray in the particle capturing enclosure, whereas the exhaust air can be exhausted into the surrounding facilities.

In typical embodiments, the particle capturing enclosure is a separate enclosure located outside an outer boundary of the food processing enclosure. However, the particle capturing enclosure can alternatively be integrated in the food processing enclosure, for example as a separate compartment within the food processing enclosure.

An exhaust vent may for example be understood as a duct, an opening, a conduit, a tube, or a canal, through which exhaust air from the food processing enclosure can flow, be vented, be carried, or be conducted to the particle capturing enclosure. The exhaust vent has a vent inlet which connects the exhaust vent to the food processing enclosure, and a vent outlet which connects the exhaust vent to the particle capturing enclosure. The exhaust vent facilitates an exhaust flow of the exhaust air, namely an exhaust flow with a stream, or directionality, from the vent inlet to the vent outlet.

Food processing installations according to embodiments of the invention may typically comprise a forced convection device such as a blower, compressor, ventilator, fan, or similar means to induce the exhaust flow. Such an arrangement may, for example, be integrated in the food processing enclosure, in the exhaust vent, or at an exhaust air outlet. However, note that embodiments of the invention are not limited to a specific placement of one or more of such devices.

According to embodiments, the spray nozzle arrangement is located downstream of the exhaust flow relative to the vent inlet. In other words, the exhaust vent defines a directionality, i.e. from the vent inlet to the vent outlet, which suggests where the spray nozzle arrangement should be located, relatively, according to preferred embodiments. For example, the spray nozzle arrangement may be located in the exhaust vent, and/or in the particle capturing enclosure.

In embodiments of the invention, said cutting device is a jet cutting device configured to eject a jet of liquid onto said food items for cutting said food items in said food processing enclosure.

The provision of the cutting device being a jet cutting device supports the spray nozzle arrangement particularly well. Firstly, it is not uncommon that up to 1% of weight of food items is removed in the cutting process when using a jet cutting device for cutting. Hence, the need for efficient filtering methods is particularly great when using a jet cutting device. Secondly, since a jet cutting device by itself already emits liquid droplets, mist, and/or vapour into the food processing installation, the addition of a spray nozzle arrangement as a means of filtering may typically not impose additional requirements to the food processing installation with regards to supply of water and adaptation of the interior of the food processing installation, such as sealing, to make it endurable to liquids.

In embodiments of the invention, said particle capturing enclosure is located separately from said food processing enclosure.

The provision of a particle capturing enclosure which is located separately from the food processing enclosure may ensure easier installation, cleaning, and/or maintenance of the particle capturing enclosure and/or the spray nozzle arrangement.

In embodiments of the invention, said food processing installation further comprises an exhaust air outlet fixed to said particle capturing enclosure for releasing said exhaust air.

In embodiments of the invention, said vent outlet faces away from said exhaust air outlet.

In embodiments of the invention, said vent outlet faces an interior side wall of said particle capturing enclosure.

The provision of a vent outlet facing away from the exhaust air outlet or facing an interior side wall of the particle capturing enclosure may reduce the risk of food aerosols being released out the exhaust air outlet without coalescing with the spray of droplets.

The vent outlet may for example face away from the exhaust air outlet by an angle in a range from 90 degrees to 180 degrees.

In embodiments of the invention, said spray nozzle arrangement is located in said exhaust vent.

The exhaust vent typically has a relatively narrow geometry, and, consequently, the provision of the spray nozzle arrangement being located in the exhaust vent may ensure increased exposure of the food aerosols to the spray of droplets from the spray nozzle arrangement.

In embodiments of the invention, said food processing installation comprises a particle filter located downstream of said exhaust flow relative to said spray nozzle arrangement.

The provision of a particle filter located downstream relative to the spray nozzle arrangement may compliment the removal of food aerosols already performed by the spray nozzle arrangement to further reduce the number of food aerosols released from the food processing equipment. Particularly, the placement of the filter after the spray nozzle, relatively to the directionality of the exhaust flow, may ensure slow saturation of the particle filter, since the majority of the food aerosols are already captured by the spray of droplets from the spray nozzle arrangement. In addition, or alternatively, the relative placement of the particle filter may ensure that the spray of droplets is not released into the environment surrounding the food processing installation.

According to some embodiments, the particle filter is furthermore located upstream (of the exhaust flow) relative to the exhaust air outlet. The particle filter may for example have a porous filter medium. It may be a washable mesh filter and/or a carbon filter. A carbon filter may for example be based on activated carbon.

In embodiments of the invention, said particle capturing enclosure is in communication with a downward collection area for receiving said spray of droplets that coalesce with said food aerosols.

The provision of a downward collection area for receiving the coalesced mixture of the spray of droplets and the food aerosols may ensure efficient collection of this mixture, particularly since gravity assists in bringing the mixture downwards.

An example of a collection area is a bottom tray, such as a bottom tray integrated in the with the particle capturing enclosure. Another example of a collection area is the floor in the facility in which the food processing installation is placed.

In embodiments of the invention, said exhaust air outlet is located distally in said particle capturing enclosure relatively to said collection area.

An example of an exhaust air outlet being located distally in the particle capturing enclosure relatively to the collection area, is the collection area being in a downwards direction and the exhaust air outlet being in an upwards direction. Upwards and downwards may for example be defined relatively to the direction of gravity.

The provision of the exhaust air outlet located distally in the particle capturing enclosure relatively to the collection area may ensure a reduced risk of food aerosols (coalesced with the spray of liquid) leaving the particle capturing enclosure through the exhaust air outlet, which is desirable in some embodiments.

In embodiments of the invention, said downward collection area is a bottom tray integrated in said particle capturing enclosure.

The provision of a bottom tray may facilitate collection and disposal of food aerosols in a controlled manner. The bottom tray may further facilitate separation of liquid from food, for example via a liquid-regulating device.

In embodiments of the invention, said food processing installation further comprises a liquid-regulating device for regulating liquid in said bottom tray.

The liquid-regulating device may for example be configured to regulate the surface level of liquid collected in the bottom tray. The liquid-regulating device may comprise a substantially U-shaped or a substantially cane-shaped pipe for passively regulating the surface level of the liquid in the bottom tray.

The provision of a liquid regulating device may prevent overflow from occurring or facilitate separation of liquid from the food collected in the bottom tray.

In embodiments of the invention, said vent outlet faces said bottom tray.

The provision of the vent outlet of the exhaust vent facing the bottom tray may ensure that the food aerosols tend to move towards the bottom tray as they enter the particle capturing enclosure from the exhaust vent, thereby reducing the risk that the food aerosols are not collected in the bottom tray.

In embodiments of the invention, said food processing installation comprises a path-blocking filter located downstream of said exhaust flow relatively to said spray nozzle arrangement and located upstream relatively to said collection area, wherein said path-blocking filter enhances mixing of said spray of droplets with said exhaust air by obstruction of free-path movement.

In embodiments of the invention, said path-blocking filter is located in said exhaust vent.

A path-blocking filter may be understood as a filter comprising an array of small plates with a spacing which by itself does not provide any filtering (of food aerosols or the spray of droplets), wherein the small plates collectively hinder a straight line of motion therethrough (at least partially). Hence, food aerosols and the spray of droplets may be amassed on the filter, thereby promoting coalescing the food particles and the spray of droplets. The resulting mixture can then, for example, flow down to a downward collection area. The individual plates of the array may for example have a substantially conical shape prompting downward flow of liquid through the filter.

In embodiments of the invention, said particle capturing enclosure is located below said food processing enclosure.

The provision of a particle capturing enclosure below the food processing enclosure may facilitate collection of food aerosols onto the floor of the facility of the food processing installation, which can be advantageous for some food processing installations. In particular, in facilities of some food processing installations, liquid and/or food residue is amassed onto the floor, which is the case for, e.g., some fish processing installations. Thereby, the food aerosols and liquid from the food processing installation can be handled simply via the regular floor-cleaning routines which are typically performed regularly in food processing facilities, instead of via a separate cleaning or waste disposal process.

In embodiments of the invention, the food processing installation is configured to discharge excess liquid of said jet cutting device via the food processing enclosure.

In embodiments of the invention, said exhaust air outlet is a bottom opening of said particle capturing enclosure.

In embodiments of the invention, said exhaust air outlet conducts communication with said collection area.

In embodiments of the invention, said collection area is part of a floor upon which said food processing installation is placed.

Typically, in food processing installations with a jet cutting device, liquid spent to cut is discharged from the food processing enclosure in some manner. By configuring the food processing installation to discharge excess liquid of the jet cutting device via the food processing enclosure, the design of the food processing installation may potentially be simplified. A particularly simple solution is to locate the particle capturing enclosure below the food processing enclosure and allow the excess liquid to discharge through the exhaust vent.

For example, the excess liquid from cutting and/or excess liquid from the spay of liquid may simply be deposited directly onto the floor via a bottom opening of the particle capturing device. Coalesced droplets may be collected at least partly via gravity by passing the coalesced droplets through the exhaust air outlet.

Optionally, such a bottom opening may further be simultaneously utilized as the exhaust air outlet, for example such that the exhaust air outlet conducts communication with the collection area, i.e., the floor. The flow of exhaust air may further promote downward movement of the coalesced droplets, thereby collecting these, for example on the floor.

Such solutions can be particularly advantageous in "wet" food processing facilities, in which, e.g., floors are already drenched with spill water, as is often the case with food processing facilities processing fish or other seafood. Thus, spilling additional water from the food processing installation onto the floor will typically not increase the burden of cleaning significantly.

In embodiments of the invention, said food processing installation comprises a forced convection device for establishing said exhaust flow of said exhaust air through said exhaust vent.

The provision of a forced convection device may induce or improve the exhaust flow.

In embodiments of the invention, said exhaust vent comprises one or more vent turns in which said exhaust flow is redirected.

In embodiments of the invention, a turn of said one or more vent turns is located within said particle capturing device.

The provision of a vent turn may potentially reduce the risk of the spray of liquid unintentionally entering the food processing enclosure. Further a vent turn may advantageously redirect the exhaust flow, and thereby food aerosols, for example into the spray of liquid and/or towards a collection area.

In a second aspect, the invention relates to a method of filtering air from a food processing installation, said method comprising the steps of:
cutting food items with a cutting device in a food processing enclosure of a food processing installation;
venting exhaust air comprising food aerosols emitted from said food processing enclosure through an exhaust vent connected to said food processing enclosure via a vent inlet and connected to a particle capturing enclosure via a vent outlet, wherein said exhaust air has an exhaust flow from said food processing enclosure to said particle capturing enclosure; and
ejecting a spray of droplets from a spray nozzle arrangement which is separate from said cutting device and located relative to said vent inlet downstream of said exhaust flow, wherein said spray of droplets is emitted into said exhaust air to coalesce with said food aerosols of said exhaust air thereby establishing coalesced droplets in which at least some of said food aerosols coalesce with said spray of droplets.

Methods of filtering air from a food processing installation according to this disclosure may provide reduced respiratory irritations of persons working near the food processing installation, reduce the need for cleaning, improve the lifetime of surrounding equipment, or any combination thereof, in a manner similar to food processing installations according to this disclosure.

In embodiments of the invention, said step of cutting said food items with a cutting device is a step of cutting said food items with a jet cutting device by ejecting a jet of liquid onto said food items.

In embodiments of the invention, said spray of droplets of said spray nozzle arrangement is a spray of ocean water droplets.

The provision of ocean water as a source for the spray of droplets may reduce the demand for clean freshwater. The use of ocean water particularly compliments cutting of fish, since such cutting is often performed in coastal regions where supplies of ocean water are readily available. Further, since the ocean water is used for aerosol filtering, and not necessarily for processing of the actual fish, the requirements of this water may typically not be as strict, enabling use of ocean water instead of freshwater in the first place.

In embodiments of the invention, said method comprises a step of collecting said coalesced droplets at least partly via gravity.

Such collection may for example be implemented by a collection area located downwardly relatively to the region in which the spray of droplets is emitted into the exhaust air to coalesce with the food aerosols.

The provision of collecting the coalesced droplets via gravity may potentially render separate (active) collection means redundant, thereby simplifying the collection of food aerosols.

In embodiments of the invention, said step of collecting said coalesced droplets comprises collecting said coalesced droplets onto a bottom tray integrated in said particle capturing enclosure.

In embodiments of the invention, said step of collecting said coalesced droplets comprises collecting said coalesced droplets onto a floor upon which said food processing installation is placed.

In embodiments of the invention, said method comprises a step of releasing said exhaust air from said particle capturing enclosure via an exhaust air outlet of said particle capturing enclosure.

In embodiments of the invention, said exhaust air outlet is a bottom opening of said particle capturing enclosure, wherein said step of collecting said coalesced droplets comprises passing said coalesced droplets through said exhaust air outlet.

In embodiments of the invention, said food aerosols comprises proteinaceous matter, preferably fish protein.

In embodiments of the invention, said food items are fish items.

In embodiments of the invention, the food processing installation of the method is any of the food processing installations according to this disclosure.

In a third aspect, the invention relates to a particle capturing device for a food processing installation for cutting food items according to any of the methods disclosure herein, wherein said particle capturing device comprises:
a particle capturing enclosure;
an exhaust vent connected to said particle capturing enclosure via a vent outlet and connected a device exterior via a vent inlet such that said exhaust vent defines an exhaust flow from said vent inlet to said vent outlet for exhaust air comprising food aerosols of said food processing installation; and
a spray nozzle arrangement located relatively to said vent inlet downstream of said exhaust flow, wherein said spray nozzle arrangement is configured to eject a spray of droplets.

A separate particle capturing device according to this disclosure may provide reduced respiratory irritations of persons working near the food processing installation, reduce the need for cleaning, improve the lifetime of surrounding equipment, or any combination thereof, in a manner similar to food processing installations according to this disclosure.

In a fourth aspect, the invention relates to use of a particle capturing device according to this disclosure in a food processing installation such as a fish processing installation.

### BRIEF DESCRIPTION OF THE DRAWINGS

Embodiments of the invention will now be further described by reference to the accompanying drawings, in which:
Fig. 1 illustrates a food processing installation according to an embodiment of the invention;
Fig. 2 illustrates a food processing installation according to another embodiment of the invention in which the particle capturing enclosure is located below the food processing enclosure;
Fig. 3 illustrates a particle capturing device according to an embodiment of the invention; and
Fig. 4 illustrates method steps according to an embodiment of the invention.

### DETAILED DESCRIPTION

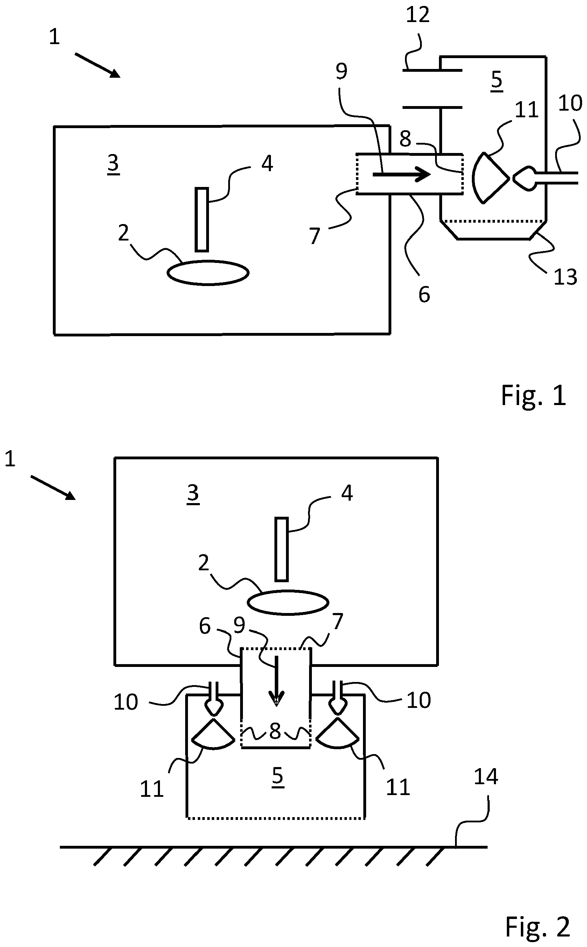

Fig. 1 illustrates a food processing installation 1 according to an embodiment of the invention.

The food processing installation 1 comprises a food processing enclosure 3 and a cutting device 4 in the food processing enclosure 3 configured to cut food items 2 in the food processing enclosure 3. Such food processing enclosures 3 with one or more cutting devices 4 are well-known. In this particular embodiment, the cutting device 4 is a saw configured to cut food items 2, such as pork.

When food items 2 are cut by the cutting device 4 in the food processing enclosure 3, small residue particles of food, herein referred to as food aerosols, are inevitably released due to the cutting. These food aerosols are initially, at least partially, confined in the food processing enclosure 3.

The embodiment further comprises a particle capturing enclosure 5 and an exhaust vent 6 connected to the food processing enclosure 3 via a vent inlet 7 and connected to the particle capturing enclosure 5 via a vent outlet. The exhaust vent 6 conducts an exhaust flow 9 of exhaust air from the food processing enclosure 3 and the vent inlet 7 to the particle capturing enclosure 5 and the vent outlet 8. Thereby, the food aerosols initially emitted into the food processing enclosure 3 are carried to the particle capturing enclosure 5 via this exhaust flow 9 of exhaust air.

In the particle capturing enclosure 5, the embodiment further comprises a spray nozzle arrangement 10 constituted by a nozzle configured to emit a spray of droplets 11 in the form of a mist. This spray nozzle 10 is directed towards the vent outlet 8. Consequently, substantially all of the exhaust air entering the particle capturing enclosure via the exhaust vent is exposed to the mist 11 emitted by the spray nozzle 10. As a result, a large fraction of the food aerosols in the exhaust air coalesces with the small droplets of the mist.

Inside the particle capturing enclosure 5, the exhaust flow of exhaust air proceeds to an exhaust air outlet 12 from which exhaust air of the food processing installation 1 is released to the facility surrounding the installation 1. Without the spray nozzle 10 and the spray of droplets 11 emitted from this nozzle 10, most of the food aerosols would be released into the surrounding facility together with the exhaust air. However, by coalescing the food aerosols with droplets from the mist 11 of the spray nozzle 10, the weight of the individual particles of the resulting mixture is greater than the weight of the food aerosols not bound to droplets from the mist 11. The food aerosols coalesced to the droplets will tend not to move with the flow of exhaust air, but instead be brought downward by gravity. Thereby, the number of food aerosols emitted to the surroundings by the food processing installation 1 is reduced, in comparison with conventional food processing installations.

This embodiment further features a bottom tray 13 integrated at the bottom of the particle capturing enclosure 5. Here, food aerosols from the exhaust air are then collected.

This particular embodiment optionally comprises a forced convection device in the form of a blower integrated in the food processing enclosure (not shown). If integrated, such a blower can be configured to establish a positive pressure inside the food processing enclosure, thereby supporting the exhaust flow of exhaust air through the exhaust vent 6 and into the particle capturing enclosure.

Fig. 2 illustrates a food processing installation 1 according to another embodiment of the invention in which a particle capturing enclosure 5 is located below the food processing enclosure 3.

In this embodiment, the cutting device 4 is a jet cutting device configured to eject a jet of liquid onto food items 2 in the form of fish to thereby cut the fish in the food processing enclosure 3.

In comparison with the embodiment illustrated in Fig. 1, the embodiment of Fig. 2 provides the particle capturing enclosure 5 being arranged below the food processing enclosure 3, with the exhaust vent 6 located accordingly. Further, the particle capturing enclosure 5 is in open communication with the floor 14 below, freely permitting air, particles, and liquid to be released downwardly out of the particle capturing enclosure 5 and thereby out of the food processing installation 1.

In use, water from the jet cutting device 4 freely discharges downwardly through the exhaust vent 6 and the particle capturing enclosure 5 after having cut food items 2. Further, in the particle capturing enclosure, 5 several spray nozzles 10 of a spray nozzle arrangement eject a spray of droplets 11 in the form of a fog. The placement of the spray nozzles 10 ensure that exhaust air conducted through the exhaust vent is exposed to the fog of the spray nozzles 10 independently of which vent outlet 8 the exhaust air travels through.

In the particle capturing enclosure 5, food aerosols released due to the cutting of fish are thereby coalesced with droplets of the fog 11 from the spray nozzle arrangement 10. The food aerosols can then accumulate on the inner walls on the particle capturing enclosure 5 or be collected directly onto the floor 14 of the facility. Any aerosols accumulated on the inner walls will generally tend to flow downward to the floor 14 subsequently, particularly since additional liquid is continuously supplied from the fog and/or the jet cutting device.

Since some food processing installations are conventionally used in facilities where wet floors are common, additional disposal of liquids onto the floor may typically not pose significantly more cleaning of the floor. In contrast, the illustrated embodiment can potentially provide a reduced need for cleaning, since liquids and food residue are not amassed inside the installation 1 itself.

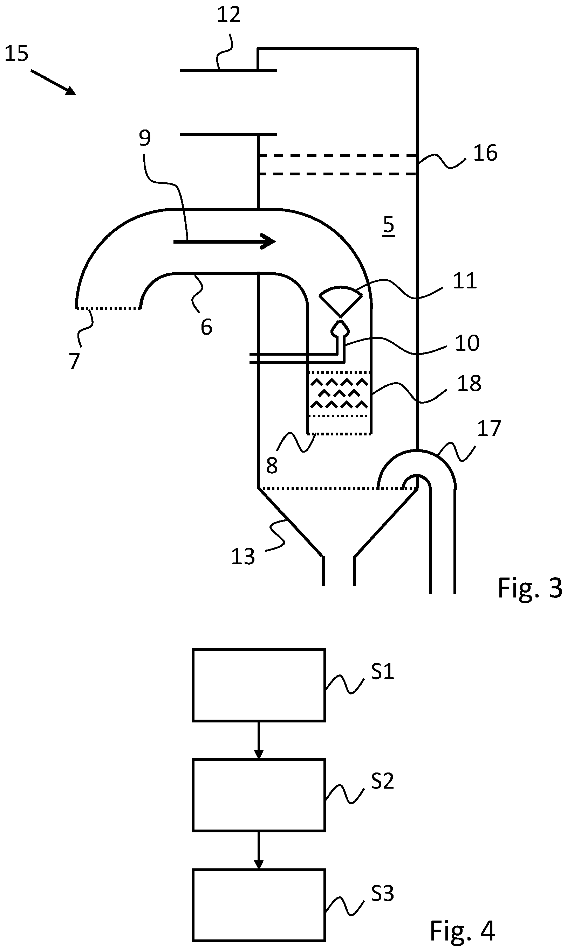

Fig. 3 illustrates a particle capturing device 15 according to an embodiment of the invention.

In comparison with a food processing installation according to embodiments of the invention, the particle capturing device does not comprise a food processing enclosure and a cutting device. However, note that other elements of food processing installations according to this disclosure can freely be integrated in a particle capturing device as the one illustrated in Fig. 3. Similarly, the additional elements of the illustrated embodiment can also be integrated in food processing installations within the scope of the invention as defined by the claims.

The particle capturing device 15 comprises an exhaust vent 6 with vent turns redirecting the exhaust flow of exhaust air. In particular, a vent turn arranged within the outer perimeter of the particle capturing enclosure 5 redirects the exhaust flow downwards towards the bottom tray 13, thereby promoting collection of food aerosols of the exhaust air.

In addition, the spray nozzle arrangement 10 is arranged within the exhaust vent 6, potentially ensuring enhanced mixing and coalescing of the food aerosols with the spray of droplets 11 from the spray nozzle arrangement 10.

Further, inside the exhaust vent 6, a path-blocking filter 18 is located between the spray nozzle arrangement 10 and the vent outlet 8. This path blocking filter comprises an array of (small) plates having a substantially conical shape which collectively hinder a straight line of motion through the filter. Liquid and food aerosols tend to accumulate on these plates, leading to mixing/coalescing. The shape of the plates allows the mixture of liquid and food aerosols to freely flow downwards to a collection area, here in the form of a bottom tray 13.

Moreover, the embodiment also comprises a particle filter 16 arranged inside the particle capturing enclosure after the vent outlet 8, but prior to the exhaust air outlet 12, relative to the exhaust flow. Even though the spray nozzle arrangement 10 preferably collects many of the food aerosols, a separate particle filter 16 may potentially capture additional particles. Particularly, food aerosols come in a broad range of sizes, and the filter 16 can potentially be selected to filter a size of food aerosols which is not effectively filtered by the spray of droplets 11. An example of a particle filter which is often suitable is a particle filter of a porous filter medium, preferably based on activated carbon.

Hence, starting from the vent inlet 7 in a downstream direction, the exhaust flow thus first passes the spray of droplets 11 and the spray nozzle arrangement 10, then the path-blocking filter 18, then the vent outlet 8, then the particle filter 16, and eventually is exits the particle capturing device 15 via the exhaust air outlet.

Finally, this embodiment also comprises a bottom tray 13 having a drain at the bottom and a cane-shaped, passive liquid-regulating device which regulates the surface level of the liquid in the bottom tray to ensure that the surface level of the liquid does not exceed a certain level.

Fig. 4 illustrates method steps S1-S3 according to an embodiment of the invention. The method relates to filtering air from a food processing installation, preferably to reduce the number of food aerosols released to the surroundings of the food processing installation.

In a first step Sl of the method, one or more food items are cut with a cutting device in a food processing enclosure of a food processing installation. Thereby, food aerosols are released into the food processing enclosure.

In a next step S2 of the method, exhaust air comprising the food aerosols emitted from the food processing enclosure is vented through an exhaust vent connected to the food processing enclosure via a vent inlet and connected to a particle capturing enclosure via a vent outlet. Accordingly, the exhaust air has an exhaust flow from the food processing enclosure to the particle capturing enclosure.

In a next step S3, a spray of droplets is ejected from a spray nozzle arrangement located, relative to the vent inlet, downstream of the exhaust flow. The spray of droplets is emitted into the exhaust air to coalesce/mix with the food aerosols of the exhaust air, thereby establishing coalesced droplets in which at least some of the food aerosols coalesce with the spray of droplets. The spray nozzle arrangement is separate from the cutting device.

Note that the method steps are typically carried out more or less continuously and simultaneously as food items are being cut by the cutting device. Further, note that methods according to this disclosure may optionally further comprise a step of collecting the coalesced droplets for example at least partly via gravity, for example onto a downward collection area such as a bottom tray or a floor.

Various versions and elements of the invention have been exemplified for the purpose of clarification rather than limitation. Well-known details of methods and systems have been omitted to not obscure the content of the disclosure with redundancy. Various elements and features of the invention and this disclosure may be combined in any way possible within the scope of the claims.

### List of figure references:

- 1: food processing installation
- 2: food item
- 3: food processing enclosure
- 4: cutting device
- 5: particle capturing enclosure
- 6: exhaust vent
- 7: vent inlet
- 8: vent outlet
- 9: exhaust flow
- 10: spray nozzle arrangement
- 11: spray of droplets
- 12: exhaust air outlet
- 13: bottom tray
- 14: floor
- 15: particle capturing device
- 16: particle filter
- 17: liquid-regulating device
- 18: path-blocking filter

- S1-S3: method steps

## Claims

1. A food processing installation (1) for processing food items (2), said food processing installation (1) comprising:
a food processing enclosure (3);
a cutting device (4) in said food processing enclosure (3) configured to cut said food items (2) in said food processing enclosure (3);
a particle capturing enclosure (5);
an exhaust vent (6) connected to said food processing enclosure (3) via a vent inlet (7) and connected to said particle capturing enclosure (5) via a vent outlet (8), wherein said exhaust vent (6) is configured to conduct an exhaust flow (9) of exhaust air comprising food aerosols emitted from said food processing enclosure (3) to said particle capturing enclosure (5); and
a spray nozzle arrangement (10) separate from said cutting device (4) and located downstream of said exhaust flow (9) relative to said vent inlet (7), wherein said spray nozzle arrangement (10) is configured to eject a spray of droplets (11) that coalesce with said food aerosols of said exhaust air.

2. A food processing installation according to claim 1, wherein said cutting device is a jet cutting device configured to eject a jet of liquid onto said food items for cutting said food items in said food processing enclosure.

3. A food processing installation according to any of the preceding claims, wherein said food processing installation further comprises an exhaust air outlet fixed to said particle capturing enclosure for releasing said exhaust air, wherein said vent outlet faces away from said exhaust air outlet.

4. A food processing installation according to any of the preceding claims, wherein said spray nozzle arrangement is located in said exhaust vent.

5. A food processing installation according to any of the preceding claims, wherein said food processing installation comprises a particle filter located downstream of said exhaust flow relative to said spray nozzle arrangement.

6. A food processing installation according to any of the preceding claims, wherein said particle capturing enclosure is in communication with a downward collection area for receiving said spray of droplets that coalesce with said food aerosols, wherein said food processing installation comprises a path-blocking filter located downstream of said exhaust flow relatively to said spray nozzle arrangement and located upstream relatively to said collection area, wherein said path-blocking filter enhances mixing of said spray of droplets with said exhaust air by obstruction of free-path movement.

7. A method of filtering air from a food processing installation, said method comprising the steps of:
cutting food items with a cutting device in a food processing enclosure of a food processing installation;
venting exhaust air comprising food aerosols emitted from said food processing enclosure through an exhaust vent connected to said food processing enclosure via a vent inlet and connected to a particle capturing enclosure via a vent outlet, wherein said exhaust air has an exhaust flow from said food processing enclosure to said particle capturing enclosure; and
ejecting a spray of droplets from a spray nozzle arrangement which is separate from said cutting device and located relative to said vent inlet downstream of said exhaust flow, wherein said spray of droplets is emitted into said exhaust air to coalesce with said food aerosols of said exhaust air thereby establishing coalesced droplets in which at least some of said food aerosols coalesce with said spray of droplets.

8. A method according to claim 7, wherein said method comprises a step of collecting said coalesced droplets at least partly via gravity.

9. A method according to any of claims 7-8, wherein said step of collecting said coalesced droplets comprises collecting said coalesced droplets onto a floor upon which said food processing installation is placed.

10. A method according to any of claims 7-9, wherein said method comprises a step of releasing said exhaust air from said particle capturing enclosure via an exhaust air outlet of said particle capturing enclosure.

11. A method according to any of claims 7-10, wherein said exhaust air outlet is a bottom opening of said particle capturing enclosure, wherein said step of collecting said coalesced droplets comprises passing said coalesced droplets through said exhaust air outlet.

12. A method according to any of claims 7-11, wherein said food aerosols comprises proteinaceous matter, preferably fish protein.

13. A method according to any of claims 7-12, wherein said food processing installation is a food processing installation according to any of claims 1-6.

14. A particle capturing device for a food processing installation for cutting food items according to any of claims 7-13, wherein said particle capturing device comprises:
a particle capturing enclosure;
an exhaust vent connected to said particle capturing enclosure via a vent outlet and connected a device exterior via a vent inlet such that said exhaust vent defines an exhaust flow from said vent inlet to said vent outlet for exhaust air comprising food aerosols of said food processing installation; and
a spray nozzle arrangement located relatively to said vent inlet downstream of said exhaust flow, wherein said spray nozzle arrangement is configured to eject a spray of droplets.

15. Use of a particle capturing device according to claim 14 in a food processing installation such as a fish processing installation.
